# EUROPEAN PATENT APPLICATION

(11) **EP 1 145 625 A1**
(43) Date of publication of application: **17.10.2001**
(21) Application number: 01201376.9
(22) Date of filing: 12.04.2001
(51) Int. Cl.: A01J 25/13, A01J 25/12, A23C 19/06

(54) **Cheese**

(30) Priority: 13.04.2000 NL 1014943
(71) Applicant: Hawk Food B.V., 5469 SC Erp (NL)
(72) Inventor: van Gerwe, Johannes Martinus Maria, 5469 SC Erp (NL)
(74) Representative: Prins, Adrianus Willem

(57) **Abstract**

A cheese characterized in that the cheese has the shape of the exterior of a clog. The cheese can have external dimensions corresponding to external dimensions of the clog. Preferably, the cheese is, at least substantially, solid. At its upper side, the cheese can be provided with a cavity symbolizing a clog's opening for a foot. Also, the cheese can be provided, on its upper side, with a sticker symbolizing a clog's opening for a foot. In particular, the cheese is further provided, at its outer side, with a number of stars symbolizing the type of cheese. The cheese can also be packaged in a transparent foil.

## Description

The invention relates to a cheese. The invention also relates to a method for manufacturing a cheese. Additionally, the invention relates to a packaged cheese.

Cheese is a product which is manufactured, inter alia, in the Netherlands. Dutch cheese is an important export product. Also, many tourists visiting the Netherlands buy a cheese to take home as a present or for personal use. The same is true of the Dutch tourist himself. Additionally, cheese is mostly sold for normal consumption.

A disadvantage of the known cheese is that it is chiefly bought by and for cheese lovers. A further disadvantage is that tourists will often have a transport capacity problem when, apart from the cheese, they want to transport other souvenirs, such as clogs.

The object of the invention is to provide a cheese which will be bought by a larger public and which meets the disadvantages mentioned.

Accordingly, the cheese according to the invention is characterized in that the cheese has the shape of the exterior of a clog.

Due to the cheese having the shape of the exterior of a clog, the cheese will also be purchased by the public wanting to buy a clog as a decorative product which is optionally consumed as well. Additionally, a group of consumers will find the cheese as such more attractive for consumption. Also, tourists will find it convenient that by buying a single product, they can in fact satisfy two different needs without having to transport two products. In particular when the cheese is a Dutch cheese, two typically Dutch products are united in one product, which brings a special effect.

The method for manufacturing a cheese is characterized in that the cheese is molded in a mold whose inner side has the external shape of a clog.

The invention will be further elucidated on the basis of the drawings. In the drawing:
Fig. 1 shows a first embodiment of a cheese according to the invention;
Fig. 2 shows a second embodiment of a cheese according to the invention;
Fig. 3 shows a third embodiment of a cheese according to the invention.

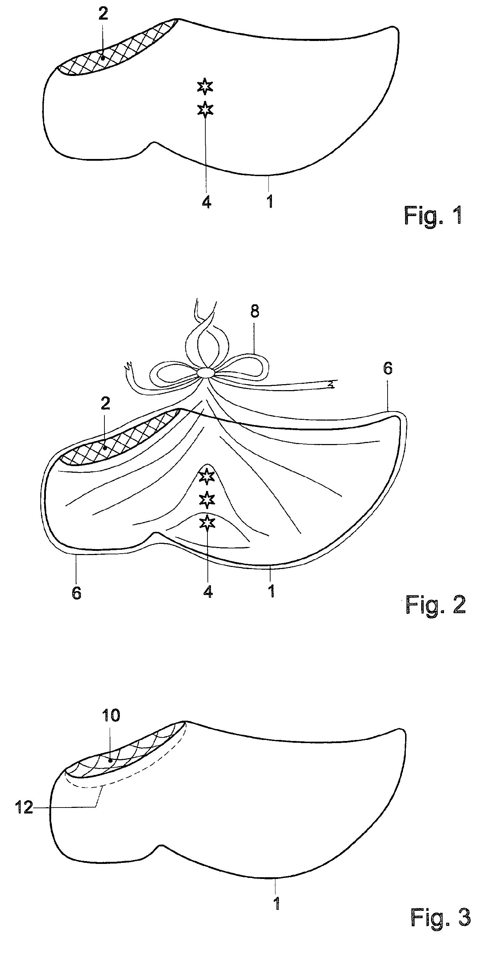

In Fig. 1, with reference numeral 1, a cheese according to the invention is designated. According to the invention, the cheese 1 has a shape of the exterior of a clog. Therefore, the cheese has a shape which is, at least substantially, identical to the external shape of a clog. In this example, the cheese 1 is a Dutch cheese such as a Gouda cheese or an Edam cheese. At least the exterior of the cheese 1 has the shape of a clog. Here, the clog is the well-known Dutch wooden clog. In this example, the cheese 1 has outside dimensions corresponding to the outside dimensions of a real clog. However, it is also possible that the cheese 1 is smaller or larger than a real clog.

In this example, the cheese 1 is, at least substantially, solid. The cheese 1 in this example therefore does not have any inner space such as a real clog has for receiving a foot. This does not exclude Swiss type cheese.

In this example, the cheese 1 is provided at its upper side with a sticker 2 symbolizing a clog's opening for a foot. This sticker 2 can, for instance, be manufactured from plastic or a different sheetlike material. At its upper side, the sticker 2 can, for instance, be black. Further, the cheese 1 is provided at its outer side with a number of stars 4, symbolizing the type of cheese. However, this is not requisite.

In Figures 1 and 2, corresponding parts are provided with the same reference numeral. In the example of Fig. 2, the cheese 1 is packaged in a transparent foil 6. At its upper side, the foil is closed with a bow 8. The sticker 2 is fixed to an outer side of the foil 6. The stars 4 are also fixed to an outer side of the foil. However, the sticker 2 and/or the stars 4 can also be fixed directly to the cheese, as has been described with reference to Fig. 1.

The foil can also be colored such that, at an upper side of the cheese, it symbolizes an opening of a clog. The sticker 2 can then be omitted. The cheese 1 of Fig. 1 or Fig. 2 can further be provided, at its upper side, with a cavity 10, symbolizing a clog's opening for a foot. The cavity 10 can be cup-shaped. The dotted line 12 shows a cross section of the cavity 10 in the longitudinal direction and over the center of the cheese 1. Optionally, the clog of Fig. 3 can be further provided with a sticker as has been discussed in relation to Figs. 1 and 2.

Any of the cheeses described here can be manufactured in a conventional manner, provided that, for manufacturing a cheese according to the invention, the cheese is molded in a mold of which an inner side has the external shape of a clog.

The invention is not limited to the embodiments outlined hereinabove. The cheese can also be made, for instance, of French cheese such as brie. Also, a pair of cheeses 1 having the shape of a pair of clogs can be packaged in the foil 6. Such variants are each understood to fall within the scope of the invention.

## Claims

1. A cheese **characterized in that** the cheese has a shape of the exterior of a clog.

2. A cheese according to claim 1, **characterized in that** the cheese has external dimensions corresponding to external dimensions of the clog.

3. A cheese according to claim 1 or 2, **characterized in that** the cheese is at least substantially solid.

4. A cheese according to any one of the preceding claims, **characterized in that** the cheese is provided, at its upper side, with a cavity symbolizing a clog's opening for a foot.

5. A cheese according to any one of the preceding claims, **characterized in that** the cheese, at its upper side, is provided with a sticker symbolizing a clog's opening for a foot.

6. A cheese according to any one of the preceding claims, **characterized in that** the cheese, at its outer side, is further provided with a number of stars symbolizing the type of cheese.

7. A cheese according to any one of the preceding claims, **characterized in that** the cheese is packaged in a transparent foil.

8. A cheese according to claims 5 and 7, **characterized in that** the sticker is fixed to an outer side of the foil.

9. A cheese according to claims 6 and 7, **characterized in that** the stars are fixed to an outer side of the foil.

10. A cheese according to claim 7, **characterized in that** the foil is colored such that, at an upper side of the cheese, it symbolizes an opening of a clog.

11. A packaged cheese according to any one of the preceding claims 7 - 10.

12. A method for manufacturing a cheese according to any one of the preceding claims, **characterized in that** the cheese is molded in a mold of which an inner side has the external shape of a clog.
